# EUROPEAN PATENT APPLICATION

(11) **EP 2 620 889 A1**
(43) Date of publication of application: **31.07.2013**
(21) Application number: 12152472.2
(22) Date of filing: 25.01.2012
(51) Int. Cl.: G06F 21/00, G08B 13/14

(54) **Theft protection**

(71) Applicant: Sony Ericsson Mobile Communications AB, 221 88 Lund (SE)
(72) Inventor: Tham, Krister, 225 94 Lund (SE)
(74) Representative: Valea AB

(57) **Abstract**

A battery powered electronic device (112) is protected from being stolen in connection with battery charging. A method comprises establishing a connection with an electric charging device (102), entering a locked mode of operation, where the locked mode of operation comprises monitoring an existence of an unlock signal and monitoring an existence of the connection with the electric charging device, and performing a protective action in response to a non-existence of the signaling connection and a non-existence of the unlock signal.

## Description

### TECHNICAL FIELD

The field of the present disclosure is that of protecting battery powered electronic devices from being stolen during charging of the battery.

### BACKGROUND

Battery technology, and in particular the technology that involves rechargeable batteries, has evolved considerably in recent years. However, the development of functionality of the devices that are powered by rechargeable batteries has progressed in an even more rapid pace. One example is the evolution of mobile communication devices in the form of so-called smartphones. A consequence of this fact is that the problem of how to keep a battery powered electronic device running for as long time as possible before the battery in the device must be recharged still remains as a central issue in this field. Moreover, it is to be expected that this problem will remain for a long time to come.

Therefore there is a need to find ways in which to at least mitigate the negative effects of the limited amount of energy that can be stored in a battery of a battery powered electronic device. One way to do this is to provide an infrastructure of distributed charging devices where users can place their battery powered electronic devices and for a shorter or longer period charge their devices. Needless to say, such charging devices must be simple to use and provide an interface that fit a large number of types of devices.

An example of such a simple to use charging device is the wireless power technology that involves short distance power transmission based on the principle of magnetic induction. In such charging devices, power is transferred from the charging device to an electronic device only if the receiver in the device is close to the transmitter in the charger, typically within a range of only a few millimeters or centimeters. When implementing an infrastructure of distributed charging devices, such wireless charging devices can be placed at a large number of locations that are accessible to visiting users. For example, charging devices can be located in trains, buses etc. as well as in other more or less public places such as stores and hotels.

However, a drawback of such an infrastructure comprising publicly available charging devices is that users will typically need to keep a constant watch over the electronic device while using the charging device in order to prevent the device from being stolen or removed by mistake by an unauthorized person. Needless to say, this problem remains whether the charging device is utilizing the wireless power technology or any other wire depending technology for providing power to the battery powered device.

### SUMMARY

In order to mitigate at least some of the drawbacks as discussed above, there is provided in a first aspect a method in a battery powered electronic device for protecting the device from being stolen in connection with battery charging. The method comprises establishing a connection with an electric charging device, entering a locked mode of operation, where the locked mode of operation comprises monitoring an existence of an unlock signal and monitoring an existence of the connection with the electric charging device, and performing a protective action in response to a non-existence of the signaling connection and a non-existence of the unlock signal.

In other words, the battery powered device is protected from unauthorized removal from a charging device by the fact that a person desiring to disconnect the battery powered device need to perform an unlocking action in order to avoid a protective action being taken by the battery powered device.

The establishing of the connection with the electric charging device may comprise establishing a signaling and/or an electric charge connection, and the monitoring of an existence of the connection with the electric charging device may comprise monitoring an existence of the signaling connection and/or the electric charge connection.

That is, depending on the implementation, protection of the battery powered device can be obtained by monitoring the electric charge connection as well as the signaling connection.

The monitoring of an existence of an unlock signal may comprise monitoring reception of an identification code and/or reception of any of a voice detection signal, a face recognition signal and a biometric recognition signal.

In other words, identification of a person authorized to remove the battery powered device from charging can be performed, for example, by way of entering a password or PIN, by speaking into a microphone or by appearing in front of a camera.

The performing of a protective action may comprise a number of different operations. For example providing any of an audible alarm indication and a visual alarm indication, as well as transmitting an alarm signal to an alarm signal receiving device (e.g. a message containing information for the receiver to take an appropriate alarm action).

That is, any unauthorized removal of the battery powered device from charging will generate an alarm that will warn an authorized person, e.g. the owner of the battery powered device, that the device is about to be stolen or otherwise removed without authorization.

The performing of a protective action may also comprise at least partly disabling operation of the battery powered electronic device.

Moreover, the performing of a protective action may also comprise recording geographic location detected by the battery powered electronic device, sound picked up by the battery powered electronic device, an image picked up by the battery powered electronic device.

That is, assuming that an alarm is not enough to protect the battery powered device from being removed, the device can be prevented from operating as well as, or alternatively, being tracked, and thereby be of limited use for an unauthorized person.

In a second aspect there is provided a computer program comprising computer readable software instructions that, when executed in a processor, performs the method as summarized above in connection with the first aspect.

In a third aspect there is provided a battery powered electronic device configured for protecting the battery powered electronic device from being stolen in connection with battery charging. The battery powered electronic device comprises connection circuitry for establishing a connection with an electric charging device, operation circuitry for entering a locked mode of operation, comprising monitoring circuitry for monitoring an existence of an unlock signal and monitoring circuitry for monitoring an existence of the connection with the electric charging device, and protection circuitry for performing a protective action in response to a non-existence of the signaling connection and a non-existence of the unlock signal.

In a fourth aspect there is provided a method in an electric charging device for protecting a battery powered electronic device from being stolen in connection with battery charging.

The method comprises establishing a connection with the battery powered electronic device, monitoring an existence of an alarm signal transmitted by the battery powered electronic device, and performing a protective action in response to the alarm signal.

In a fifth aspect there is provided an electric charging device configured for protecting a battery powered electronic device from being stolen in connection with battery charging. The electric charging device comprises connection circuitry for establishing a connection with the battery powered electronic device, monitoring circuitry for monitoring an existence of an alarm signal transmitted by the battery powered electronic device, and protection circuitry for performing a protective action in response to the alarm signal.

The second to fifth aspects provides effects and advantages that correspond to those summarized above in connection with the method according to the first aspect.

### BRIEF DESCRIPTION OF THE DRAWINGS

Figure 1a is a schematically presented first block diagram of a charging device and a battery powered electronic device in the form of a mobile communication device,
figure 1b is a schematically presented second block diagram of the charging device and the device of figure 1a,
figure 2a is a flow chart of a method performed in a battery powered electronic device, and
figure 2b is a flow chart of a method performed in a charging device.

### DETAILED DESCRIPTION OF EMBODIMENTS

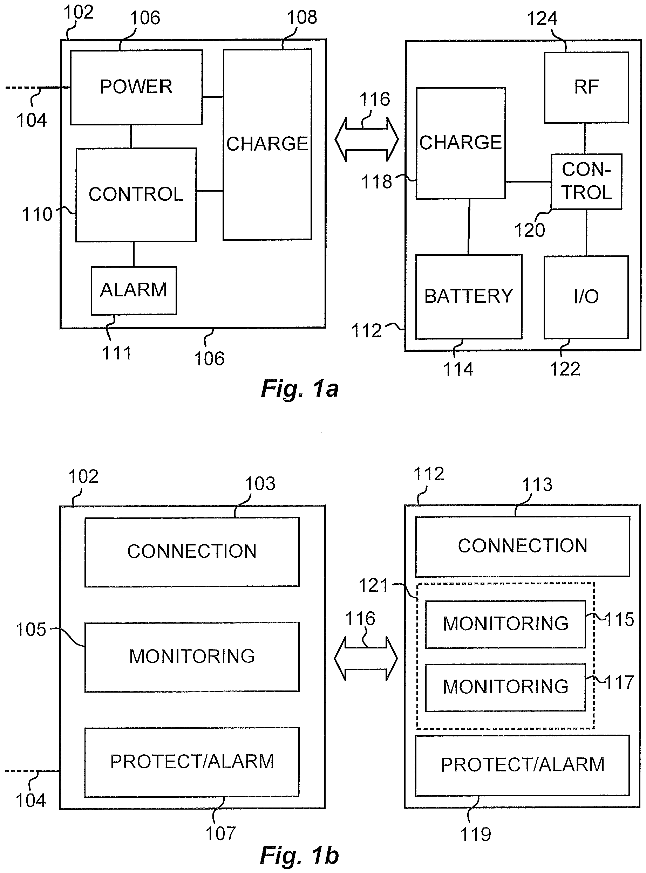

In figure 1a a charging device 102 is configured to provide energy to a battery powered electronic device 112 via a connection 116. The charging device 102 is connected to an external electric power provider via an electric power lead 104. Power circuitry 106, controlled by control circuitry 110, conveys electric power to charging circuitry 108 that interfaces with the battery powered electronic device 112 via the connection 116. The charging circuitry 108 is controlled by the control circuitry 110 and is in figure 1a illustrated in a generic manner and may in specific implementations be in the form of wireless power technology circuitry as well as wire based circuitry, as the skilled person will realize. The connection 116 is configured such that it can transfer electric energy as well as signaling information, as will be described below. An alarm output unit 111 is connected to the control circuitry 110 and, as will be discussed in more detail below, can provide an alarm in the form of, e.g., an audible signal.

The battery powered electronic device 112 comprises a battery 114 that is configured to receive electric energy via charging circuitry 118 that is operating under the control of a control unit 120. As for the charging circuitry 108 of the charging device 102, the charging circuitry 118 of the battery powered electronic device 112 is illustrated in a generic manner and may in specific implementations be in the form of wireless power technology circuitry as well as wire based circuitry, as the skilled person will realize.

The control unit 120 in the battery powered electronic device 112 is also connected to, and is configured to control, radio frequency transceiver circuitry 124 and data input/output circuitry 122. This configuration has been selected in order to illustrate that the battery powered electronic device 112 can be exemplified with a mobile communication terminal that can communicate in a mobile communication network. The data input/output circuitry 122 can be exemplified with a keypad, a display, a microphone, a loudspeaker, a camera etc., as the skilled person will realize. As will be described below, an alarm signal can be output via, e.g. a speaker in the input/output circuitry 122. For the sake of clarity, and as the skilled person will appreciate, the present detailed description does not include a description of how the control unit 120 operate in order to perform the normal functions of a mobile communication terminal.

Figure 1b is an illustration of the charging device 102 and the battery powered electronic device 112, connected via the connection 116, in which functional blocks illustrate the operation of the two connected entities102,112. The charging device 102 comprises connection circuitry 103, monitoring circuitry 105 and protection circuitry 107. The connection circuitry 103 is configured for establishing a connection with the battery powered electronic device 112. The monitoring circuitry 105 is configured for monitoring an existence of an alarm signal transmitted by the battery powered electronic device 112, and the protection circuitry 107 are configured for performing a protective action in response to the alarm signal. As indicated above, the charging device 102 can be a wireless charging device as well a charging device that is connected via a wire connector such as a universal serial bus, USB, connector.

The battery powered electronic device 112 comprises connection circuitry 113, first monitoring circuitry 115, second monitoring circuitry 117 and protection circuitry 119. The connection circuitry 113 is configured for establishing a connection with the electric charging device 102, the first monitoring circuitry 115 and the second monitoring circuitry 117 form part of operation circuitry 121. The operation circuitry 121 is configured for entering the battery powered electronic device 112 into a locked mode of operation in which the first monitoring circuitry 115 is configured for monitoring an existence of an unlock signal and the second monitoring circuitry 117 is configured for monitoring an existence of the connection 116 with the electric charging device 102. The protection circuitry 119 is configured for performing a protective action in response to a non-existence of the connection 116 and a non-existence of the unlock signal. The connection circuitry 113 and the first monitoring circuitry 115 can be configured for interacting with a wireless electric charging device as well as interacting with a charging device that is connected via a wire connector such as a USB connector.

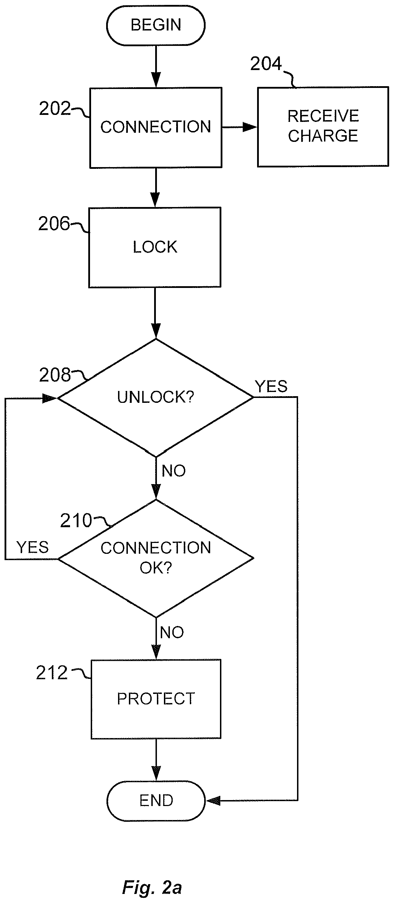

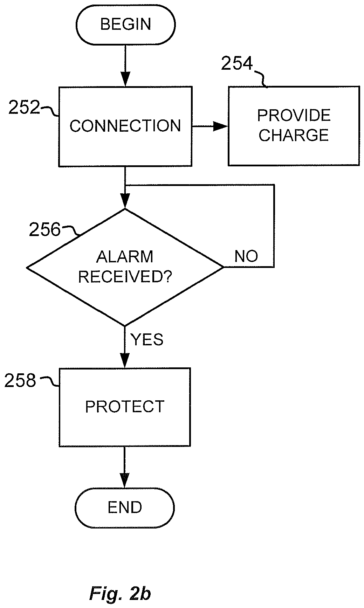

Turning to figures 2a and 2b, and with continued reference to figures 1a and 1b, methods of operating a battery powered electronic device, such as the device 112, and a charging device, such as the device 102, will now be described in some more detail. The methods to be described can be realized in the devices 102, 112 by way of software instructions residing in control circuitry, such as the control units 120 and 110 illustrated in figure 1a. Such software instructions can also be described in terms of the functional units of figure 1b.

First with reference to figure 2a, a method in a battery powered electronic device for protecting the device from being stolen in connection with battery charging comprises an initial connection step 202 in which a connection is established with an electric charging device. After connecting, electric charge is received by the battery powered electronic device, as indicated with a charge reception step 204. While receiving electric charge, the battery powered electronic device enters a locked mode of operation as illustrated with a locking step 206. The locked mode of operation comprises monitoring an existence of an unlock signal, as illustrated by a first checking step 208, and monitoring an existence of the connection with the electric charging device, as illustrated by a second checking step 210. If an unlock signal is detected in the first checking step 210, the method terminates. Whether or not reception of electric charge is terminated depends on the specific situation. As summarized above, the detection of the unlock signal means that an authorized user is in control of the battery powered electronic device and, typically, after detecting the unlock signal, the battery powered electronic device will find itself disconnected from the electric charging device and as a consequence of this, reception of electric charge terminates. Depending on the implementation, the monitoring of the unlock signal may involve a number of different types of detections. For example, in cases where the battery powered electronic device is in the form of a so-called smartphone or similar device having a keypad, a microphone and a camera, the unlock signal can be an identification code (e.g. a PIN) entered via the keypad, a voice detection (i.e. a recognition of a user's speech), a face recognition or any other biometric recognition that can be recorded with the camera.

If, in the first checking step 208, an unlock signal is not detected, the second checking step 210 is performed. If it is detected in the second checking step 210 that the connection with the electric charging device exists, the monitoring steps 208, 210 repeat. Depending on the implementation, the checking of the connection may involve checking if a signaling connection exists as well as checking if an electric charge connection exists.

If checking step 210 detects that the connection with the electric charging device does not exist, a protective action is performed in a protection step 210. In other words, detecting that the connection with the electric charging device no longer exists and detecting that no unlock signal has been detected means that an unauthorized user is in control of the battery powered electronic device and a protective action is performed. Depending on the implementation, the protective action can be a number of different actions including simple audio and audiovisual alarm signals generated via a speaker and a display in the battery powered electronic device itself. In implementations in communication devices such as so-called smartphones or similar devices that are capable of communicating with other similar devices, the protective action can involve sending an alarm signal to an external device where the alarm can be recognized and appropriate action taken. For example, a device in the form of a mobile telephone is typically capable of transmitting short messages, e.g. SMS, MMS etc., or messages via short range radio connections such as Bluetooth and near field communication, NFC. Furthermore, the alarm signal can also be provided to the electric charging device in which the appropriate action, such as sounding an audible alarm, can be taken. This will be described in more detail below in connection with figure 2b.

Another way of implementing the protective action is to at least partly disable the battery powered electronic device. Such disabling can involve any appropriate action, depending on the type of device. For example, a mobile telephone can be disabled by simply shutting off the radio circuitry or any other essential part of the device that would make the unauthorized user less interested in taking the device. The protective action can also be in the form of more or less elaborate logging schemes where the battery powered electronic device records information regarding its environment. For example, recording can be made of the geographic location (assuming the device is equipped with location detection hardware and software), sound that is picked up by a microphone in the device or an image picked up by a camera in the device. Such logged information can be used or even retrieved from the battery powered electronic device at any desirable point in time.

Some embodiments include those where the protective action is canceled upon detection that the battery powered electronic device is returned to connection with the electric charging device. For example, an alarm signal involving an audible alarm generated in a speaker can be silenced.

As mentioned above, some implementations are such that the protective action comprises transmission of an alarm signal and where the alarm signal is transmitted to the electric charging device. Such an embodiment involves also a method that is performed in an electric charging device as illustrated in the flow chart in figure 2b. The method in the electric charging device comprises an initial connection step 252 in which a connection is established with a battery powered electronic device. After connecting, electric charge is provided by the battery powered electronic device, as indicated with a charge transmission step 254. While providing electric charge, a monitoring step 256 is performed during which monitoring takes place of an existence of an alarm signal transmitted by the battery powered electronic device, e.g. via a signaling connection that forms part of a connection such as the connection 116 in figures 1a and 1b. If an alarm signal is detected in the monitoring step 256, a protective action is performed. Depending on the implementation, the protective action can comprise providing any of an audible alarm indication and a visual alarm indication via, e.g., a speaker and a flashing light source.

## Claims

1. A method in a battery powered electronic device for protecting the device from being stolen in connection with battery charging, the method comprising:
- establishing a connection with an electric charging device,
- entering a locked mode of operation, where the locked mode of operation comprises monitoring an existence of an unlock signal and monitoring an existence of the connection with the electric charging device, and
- performing a protective action in response to a non-existence of the connection and a non-existence of the unlock signal.

2. The method of claim 1, wherein:
- the establishing of the connection with the electric charging device comprises establishing a signaling connection, and
- the monitoring of an existence of the connection with the electric charging device comprises monitoring an existence of the signaling connection.

3. The method of claim 1 or 2, wherein:
- the establishing of the connection with the electric charging device comprises receiving electric charge from the electric charging device, and
- the monitoring of an existence of the connection with the electric charging device comprises monitoring an existence of electric charge reception.

4. The method of any of claims 1 to 3, wherein:
- the monitoring of an existence of an unlock signal comprises any of:
- monitoring reception of an identification code,
- monitoring reception of any of a voice detection signal, a face recognition signal and a biometric recognition signal.

5. The method of any of claims 1 to 4, wherein:
- the performing of a protective action comprises providing any of an audible alarm indication and a visual alarm indication.

6. The method of any of claims 1 to 5, wherein:
- the performing of a protective action comprises transmitting an alarm signal to an alarm signal receiving device.

7. The method of any of claims 1 to 6, wherein:
- the performing of a protective action comprises at least partly disabling operation of the battery powered electronic device.

8. The method of any of claims 1 to 7, wherein:
- the performing of a protective action comprises recording any of:
- geographic location detected by the battery powered electronic device,
- sound picked up by the battery powered electronic device,
- an image picked up by the battery powered electronic device.

9. A computer program comprising computer readable software instructions that, when executed in a processor, performs the method of any of claims 1 to 8.

10. A battery powered electronic device configured for protecting the battery powered electronic device from being stolen in connection with battery charging, comprising:
- connection circuitry for establishing a connection with an electric charging device,
- operation circuitry for entering a locked mode of operation, comprising monitoring circuitry for monitoring an existence of an unlock signal and monitoring circuitry for monitoring an existence of the connection with the electric charging device, and
- protection circuitry for performing a protective action in response to a non-existence of the connection and a non-existence of the unlock signal.

11. The battery powered electronic device of claim 10, where:
- the connection circuitry for establishing a connection with an electric charging device comprises circuitry for establishing a connection with a wireless electric charging device, and
- the monitoring circuitry for monitoring an existence of the connection with the electric charging device comprises circuitry for monitoring an existence of a connection with the wireless electric charging device.

12. A method in an electric charging device for protecting a battery powered electronic device from being stolen in connection with battery charging, the method comprising:
- establishing a connection with the battery powered electronic device,
- monitoring an existence of an alarm signal transmitted by the battery powered electronic device, and
- performing a protective action in response to the alarm signal.

13. The method of claim 12, wherein:
- the performing of a protective action comprises providing any of an audible alarm indication and a visual alarm indication.

14. An electric charging device configured for protecting a battery powered electronic device from being stolen in connection with battery charging, comprising:
- connection circuitry for establishing a connection with the battery powered electronic device,
- monitoring circuitry for monitoring an existence of an alarm signal transmitted by the battery powered electronic device, and
- protection circuitry for performing a protective action in response to the alarm signal.

15. The electric charging device of claim 14, where the charging device is a wireless charging device.
